# EUROPEAN PATENT APPLICATION

(11) **EP 2 106 121 A1**
(43) Date of publication of application: **30.09.2009**
(21) Application number: 08380104.3
(22) Date of filing: 27.03.2008
(51) Int. Cl.: H04N 5/00, G10L 21/06, G10L 15/22

(54) **Subtitle generation methods for live programming**

(71) Applicant: Mundovision MGI 2000, S.A., 41092 Isla de la Cartuja (Sevilla) (ES)
(72) Inventor: Gonzalez Lopez, Carmen, 41092 Isla de la Cartuja (Sevilla) (ES); Gomez Rivera, Pedro, 41092 Isla de la Cartuja (Sevilla) (ES); Morillo Jimenez, Elena, 41092 Isla de la Cartuja (Sevilla) (ES); Diaz de Maria, Fernando, 28911 Leganes (Madrid) (ES); Segura Luna, José Carlos, 18071 Granada (ES); Cruces Alvarez, Sergio, 41092 Isla de la Cartuja (Sevilla) (ES)
(74) Representative: Carvajal y Urquijo, Isabel

(57) **Abstract**

Subtitle generation method for live programs with numerous participants (1) including: assigning a subtitling technician (2) to each participant (1) of the program; each subtitling technician repeating, in a summarized form, what the participant assigned to him/her is saying; transforming the acoustic signals of each subtitling technician (2) in audio signals using a microphone (7); extracting an adapted text (4) from each audio signal in an automatic voice recognition phase; sending each adapted text (4) to a central data processing unit (6); revising, with the help of a subtitling editor (5), the adapted text (4) received by the central data processing unit (6), thus giving the text the proper format and/or correcting the errors produced during the automatic voice recognition stage; inserting the adapted text (4), once revised, of each participant in the images of the program, transmitting said images to the screen (9) with the text (4) already inserted.

## Description

### Field of invention

This invention is included in the field of generation and visualization of subtitles in real time and is applicable to live television programs.

### Prior to the invention

Currently, TV channels, both public (national and autonomous) and private (national), have been increasing, over the last few years, the number of subtitled hours. Despite these significant increases, the data continues to show demonstrably insufficient results; especially if, from a legal perspective, we use as a reference point the ambitious goals that the Spanish Law 51/2003 for Equal Opportunities, No Discrimination and Universal Accessibility for Physically and Mentally Challenged People, known as LIONDAU, proposes to reach in Spain. The articles of this Spanish law, particularly Article 3, explicitly mention the telecommunications and information society sectors and the services related to both and, in general, to the TIC (Information and Communications Technologies). Specifically, it indicates that the Spanish Government, without harming the competencies of the Spanish Autonomous Communities, will regulate the basic conditions of accessibility and equality that should be fixed in areas such as *"complementary support systems like economic aid, technological support, specialized services or treatments and other personal services, particularly support systems in oral communication and sign language or other means that allow for communication."*

The data suggests that this ambitious objective is not being plainly met; and, specifically, in the world of subtitling, there are at least two reasons for this:
- The referenced law (LIONDAU) does not impose concrete requirements since it only defines the existence of accessibility plans that will, over the next ten years, establish obligations relevant to the disappearance of communication barriers in audiovisual media, among other aspects. Approval of the General Audiovisual Law in Spain, which, as the existing draft implies, will establish the obligation of making TV programming accessible to the sensorially handicapped through the use of subtitles, audio description and sign language, is expected soon. This draft includes programming accessibility percentages that increase every year.

In this sense, in the Autonomous Community of Andalusia, in Spain, the recently promulgated Law for Autonomous Entitlement of Radio and Television establishes, in its third transitory resolution, the calendar for accessible programming for sensorially challenged people, which culminates in 2015 with an obligation for subtitling 100% of this community's programming.
- The cost of the subtitling process in two areas:
   - Training subtitlers: There is no special degree for practicing this job, nor much less, is there a degree oriented toward the subtitling consumer, the deaf. This leaves the decision to enter this market and also the way in which they apply their own criteria in terms of training up to each company. This fact fails to facilitate the existence of certain minimal quality standards in the totality of the subtitled programming emitted by the television channels. Regardless, it is considered that approximately 100 hours of training and 400 hours of practice are needed to be able to adequately prepare a sufficiently qualified professional. Additionally, the access requirements are diverse and not especially easy to find in the labor market: a great competency in the area of language, typing (exceeding 400 keystrokes per minute) and/ or computerized steno typing, etc...
   - The task of subtitling, which is considered to represent approximately two million Euros for 18 hours of daily subtitled programming, an expense that, on one hand and regardless of whether or not the television operators can assume these costs, does not yield, at first, any economic returns, is thus avoided since the legal regulations, previously stated, are not demanding in this aspect.

It is clear that, in this environment, any tool that can lower the demands of the subtitling process should tend to notably improve the data presented at the beginning of this argumentation.

The generation of quality subtitles for strictly live programming can be evaluated by applying two fundamental parameters:
- The synchronization between the appearance of subtitles on the screen with the dialogues being subtitled.
- The minimum showing time of subtitles on screen, allowing for them to be read with certain convenience.

The combination of these two parameters should result in a level of quality such that a deaf person will not suffer from a loss of more than 10% of the information with respect to those people who do not use subtitling.

The generation of subtitles in real time for television programs emitted strictly in a live format is a process that presents two important difficulties: the speed of the dialogues and the overlapping that occurs between the various participants in the program. These difficulties are present in larger or smaller measures depending on the type of program to be subtitled. These two difficulties directly affect the quality parameters previously stated (synchronization and visualization time).

Currently, and only for specific live programming, subtitling tools and techniques (computerized steno typing, QWERTY keyboards adapted to high pulsation levels, etc...) are used. These tools and techniques require the intervention of qualified professionals, who also have received specific training and, thereby, constitute a scarce and expensive resource.

The objective of this invention is to obtain a tool for subtitling in real time live programming that will allow for the attainment of high quality indexes, which can then be applied to any type of program, which will automate the process and, consequentially, lower the level of specialization needed by those people who currently intervene in the process. This lower level of specialization will bring with it a lowering of the cost of subtitling, which will indirectly lead to an increase in the number of hours emitted with live subtitles.

### Description of the invention

The invention is a method for generating subtitles for live programming according to demands 1. Preferred production is defined in the dependent demands.

The method includes:
- Assigning a subtitling technician to each participant in the program, being able to assign one subtitling technician to various participants. Such assignment will occur before the start of the live programming
- Repeating, by each subtitling technician, in a summarized and conceptualized form, what his/her assigned participant is saying, at that time, in the live program
- Transforming acoustic signals from the voice of each subtitling technician in electrical signals using, at least, one microphone
- Extracting, in an adapted text, each signal during a stage of automatic voice recognition
- Sending each adapted text to a central data processing unit
- Revising, with the use of a subtitling editor, the adapted text received by the central data processing unit, thus giving the text the proper format and/or correcting the errors produced during the automatic voice recognition stage by the subtitling technician.
- Inserting the adapted text, once revised, of each participant in the images of the program, with the text and images duly synchronized, transmitting said images with the text already inserted

The subtitling editor will be in charge of manually launching the revised subtitles and, given that this person is both watching and listening to the original program, procuring that the subtitles appear at an adequate time, never before the words/concepts of the subtitling technician have been said and, at the same time, minimizing the time gap between the production of the sound and the appearance of the subtitle.

Additionally, the method can include, before the adapted text is extracted, a stage in which the audio signals are processed to separate the various different voice signals and reduce the external noise and interference.

The audio signal processing stage can be done all at once for all the audio signals from the microphones of the central audio processing unit or, rather, it can be done independently for each of the audio signals from the microphones.

The automatic voice recognition stage of each subtitling technician will be done with a voice recognizer, corresponding to one voice recognizer per technician and each voice recognizer being adapted to the corresponding subtitling technician.

Each voice recognizer has a database with information adapted to the topic of live program.

The method identifies the participant to which each image-inserted text corresponds and colors the adapted text, already revised, of each participant according to the pre-determined color for each participant.

The identification of the participant to which each image-inserted text corresponds is done preferably by the subtitling editor, although the subtitling technician can also do so during the automatic voice recognition stage using the voice recognition application, thus sending to the subtitling editor (to his/her central data processing unit) the said information relevant to the identification of the participant along with the adapted text.

Additionally, the method can include sound effects and/or contextual information, from a predetermined list, for a specific image-inserted text. An example of a sound effect could be "laughing," "explosion," "door slamming," etc... On the other hand, contextual information could be "sarcastic tone." These insertions, sound effects and contextual information can be included by the subtitling technician with the voice recognition application or by the subtitling editor at the central data processing unit.

### Brief description of the diagrams

Next, a series of diagrams that help better explain the invention and that which is expressly related to the production of said invention, which is presented as a nonlimiting example, will be briefly described.
Figure 1 shows a diagram of the invention applied to controlled transmissions with various participants in which a "re-speaker," or subtitling technician, is used.
Figure 2 shows a configuration with a combined separation of voice signals from the "re-speakers."
Figure 3 shows a configuration with an isolated separation of voice signals from the "re-speakers."
Figures 4 through 7 show several mixed situations with different complexities in the separation of voice.

### Description of a preferred production by the invention

In principle, live programming can be divided into three categories that, when organized from lesser to greater complexity for the subtitling and voice recognition points of view, are the following:
1. Transmissions with known spoken contents
2. Controlled transmissions, in which the contents are unknown, but the topic is known and the participants in the program rigorously respect speaking turns.
3. Open transmissions, in which the topic is not known (or dynamically changes) and the participants in the program speak spontaneously and in an uncontrolled way in terms of speaking turns.

As to the first group of programs, transmissions with known spoken contents correspond to the segment that is predominantly composed of news programming in which the speakers or presenters clearly read a known text without interruptions and in a controlled environment in so much as the signal and noise are concerned. In some occasions, this dialogue could be interrupted by an audiovisual clip with taped or live content. Therefore, in this type of program, there are two ways in which to operate, known as "false live" and "strictly live" programming. False live programming corresponds with those transmissions or bits of programming in which the editing team of the program has already previously worked on the text, so that the news presenter (and the supportive technological system) has a text that should be read or, in the case of an audiovisual clip, the presenter has a text transcription, produced manually and externally from the system. In this case, the work of the subtitler can be carried out before the transmission of the program and will consist of using the available text from the editing team to supply a fitted and adapted form of the subtitling contents in so much as the quantity of words per line, the distribution of the contents across several lines, the elimination of redundant content and the inclusion of relevant sound effects without the need of using voice recognition. Once properly fitted, it is saved in the system and ready to by emitted during subtitling. When the segment or clip has passed through this pre-production, it is transmitted in real time, and the subtitler manually launches the subtitles as the program is being transmitted, thus achieving a perfect synchronization between the transmission and the subtitling.

"Strictly direct" programming corresponds to live connections and/or audio clips or even news segments for those with this composition and previous text fitting. In these cases, in reality, these parts of the program are admissible in the second category reflected above, for which the function of the subtitling method is that which is described in the following paragraphs.

The best example of the second category of programs, controlled transmissions, are debates in which the topic is known and the speaking turns are more or less rigorously respected by the various participants in the program, but the environment that surrounds the voice (noise) is controlled. Therefore, those programs with structures in which the speaking turns, if they even exist, are not respected and constant interruptions take place (which should be categorized as noise with respect to the primary speaker's voice) and/or those programs in which the topic openly changes should not be included in this category.

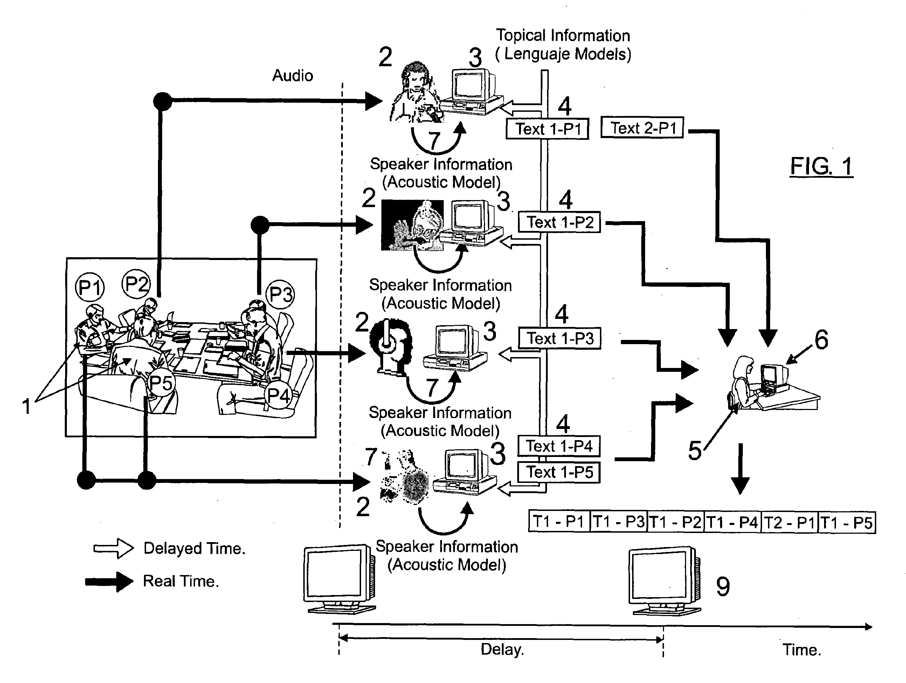

The technological solution proposed in this scenario is the technique of the "re-speaker," this being subtitling technician 2, which is represented in Figure 1.

Subtitling technician 2 is a person who is listening to the transmission of the program in real time and is thus able to understand what one of the participants 1 is saying and will then repeat it, while summarizing and conceptualizing it. In Figure 1, four subtitling technicians 2 are depicted for the five participants 1 because some of the subtitling technicians 2 can work with several of the participants 1 at the same time since their interventions are sequential and not simultaneous (in an extreme case, the number of subtitling technicians 2 could be as few as one).

Each of the subtitling technicians 2 has a voice recognizer 3 operating on a computer that, when offline (meaning without real time restrictions), has been adapted from an acoustic point of view for that specific person and that, also, has been previously prepared with sufficient information about the specific topic to be discussed in the program that is being subtitled. In this way, optimal performance will be achieved (that is to say, the lowest occurrence of errors) by the voice recognizer 3, thus attaining an adapted text 4 from the dialogues of each participant 1, which are sent then to a central data processing unit 6.

Therefore, the subtitling technician 2 listens to a small fragment (a few sentences) and repeats it, adapting it when necessary. The interventions of participants with assigned colors can be indicated by the voice recognition application installed in the computer, for example, by typing the corresponding key. If several people who use the color white speak, for example, the key corresponding to the color white will be pressed before each intervention. In addition to assigning color with keystrokes, the voice recognition application creates a new line, adding dashes, capital letters at the beginning of each sentence and a period and the end of the previous intervention. The voice recognition application can show an active vocal graphic in which the beginning and the end of the intervention are marked, thus synchronizing the text within this interval. When the end of the intervention is marked, if the program detects more characters than the allowable according to the established parameters, a visual signal in the text and in the page number strip will warn of the error. To rectify this, the text will be adapted until the said warning signal disappears, as the text should be fitted and reordered automatically.

The process will be completed by a subtitling editor 5, who manages the central data processing unit 6 and who is listening to the live program and can carry out various tasks:
- The editor will correct the possible mistakes of the voice recognition device, be they conceptual or grammatical due to confusion caused by phonetically similar or identical words (for example "a" and "ha"). The editor will likewise complete the transcriptions of the voice recognizer 3 with the corresponding punctuation.
- The editor will add information to the subtitle, identifying participant 1 by coloring his/her texts every time he/she speaks: this task can also be assigned to the voice recognition application executed by subtitling technicians 2.

The better or worse quality of the voice recognition process and the application in its entirety will make one or both of these functions more or less necessary:
- Complete the subtitling information, including environmental factors (rejections not properly expressed by other participants, attending audience, etc...)
- Quality control in real time to be carried out during commercial breaks (turn assignments, recommendations for mistakes made, etc...)

Regardless, it should be kept in mind that the figure of the subtitling editor 5 presents a delay in the transmission seen on screen 9 of the images of the live program with the adapted text 4 conveniently inserted and synchronized.

In order to achieve the best recognition rates possible, it is recommendable for the technician or subtitling technicians 2 to find an environment free from noise and external interferences like, for example, in a booth or recording room. In the case of there being more than one subtitling technician 2, even inside an environment acoustically resistant to the outside, it is likely that they will not find themselves sufficiently isolated from each other, reason for which certain sequential speaking turns should be respected so as to avoid interference from one to the other. The speaking turns of the subtitling technicians 2 will be determined by the interventions of the participants 1 in the program being transmitted.

Even so, this invention takes into account another solution, more practical and economical than the first, which tries to preserve the positive features of the voice recognition. This solution is achieved by reducing the demands for isolation of the subtitling technicians 2, from each other and from the outside, thus allowing for notably reducing the cost of subtitling live. In exchange, a pre-processing stage for taped signals is inserted to improve the separation of the various voice signals and eliminate part of the noise and other possible interferences

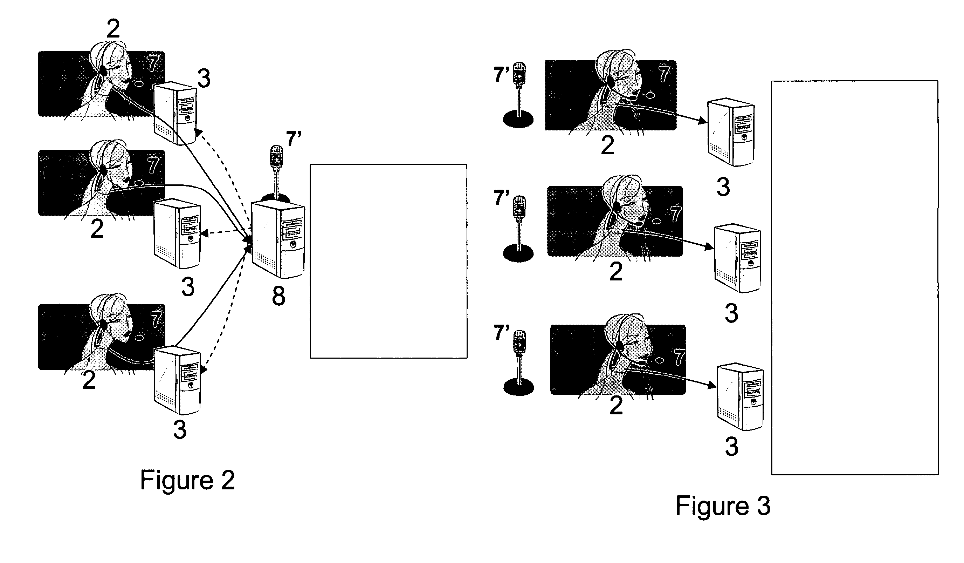

If, at this time, the pre-processing technicians require an additional amount of computational time, this can be reduced by choosing those technicians who obtain acceptable results with moderate potentials of calculation. There are different techniques:
1. The configuration of the joint separation of voice signals, as shown in Figure 2, is the configuration that, at first, is more advantageous. In the configuration, one data acquisition card captures the signals from different microphones 7 and, over these, the methods of separation and cancellation of interferences are centrally applied using a central audio processing unit 8, such as a computer. Once the voice signals are separated and improved, they are distributed to the computers (to the voice recognizers 3) of the various subtitling technicians 2 who are active.
   The advantage of this technique is that more microphones are not needed (at least not substantially so, as we will now see), since each re-speaker has one, but the process of separation is enormously more complex because of the lack of information about the influence that each re-speaker has over the rest (which is to say, over the potential acoustic signals that are received by each microphone from the voices of the other re-speakers). To alleviate this difficulty (the burden of processing that is required) an environmental microphone 7' is added and it is assumed that the acoustic signal that is received by it is exactly the same signal received by each of the microphones 7 of the re-speakers. Therefore, the total number of microphones is N+1, N being the total number of re-speakers who intervene in the process.
2. The configuration of the isolated separation of voice signals, as shown in Figure 3, is less ambitious than the previous configuration since, in the latter, the number of microphones 7 available and the diversity of these is greatly reduced (or is not notably increased). In this configuration, each subtitling technician 2 relies on a couple of microphones (7, 7'), which are included in the separation of voice signals algorithm used by the computer. This algorithm will try to separate the voice signal of the closest subtitling technician 2 to the joint component of the rest of the subtitling technicians 2. Contrary to the previous case (N+1 microphones), 2xN microphones are needed in exchange for a streamlined separation process that then influences the global delay in the generation of subtitles.

As for the third group of programs, open transmissions, this is the most frequent case as well as the most complex case for subtitling and, while the "re-speaker" technique previously described could be applied, the information about the specific theme can not be uploaded to the voice recognizer, generally speaking, because it is not known in advance or because it is not very concrete or varies too much in a short span of time.

Therefore, in this group of programming, there exists a problem with voice recognition in the presence of noise or, in general, acoustic signals that superimpose the main speaker. A clear example of this type of application is the live subtitling done for daily chronicles for news programs.

In these files, several different techniques for blindly separating signals will be applied. These techniques make up a pre-processing phase that improves the recorded voice signal and allows the recognition rate to increase. This improvement is necessary in order to take on the subtitling of open programs or those programs with less demanding control requirements.

The separation of voice or audio signals in noisy environments is a typical application of blind separation theory for independent signals. It is well known that people are able to selectively listen to a variety of conversations that interest us while immersed in a noisy environment. This ability is illustrated by the "cocktail party" effect, which tends to occur in parties where people maintain parallel conversations closely together and there is a lot of background noise (music, silverware, etc...) As of yet, it is not known exactly which mechanism allows the human brain to selectively listen to a conversation of interest, but it is known that, in order for this phenomenon to occur, the intervention of both ears is needed, which also indicates the existence of spatial diversity in the mix. With a recorded sound reproduced by a speaker, the effect is impossible. The first separation algorithms came from trying to model the capacity of the brain to resolve this problem. To date, even though the majority of separation algorithms are not plausible from a biological point of view, a solid mathematical base for the separation of voice signals has been achieved.

The voice signal separation techniques began to be applied to various problems of general interest: voice quality improvements for cellular phones, improvements in vehicular voice recognition devices and teleconferencing systems, improvements in voice-controlled devices and to help people with auditory deficiencies. This invention is oriented toward this last application as it aims to obtain improvements in subtitling for live programming.

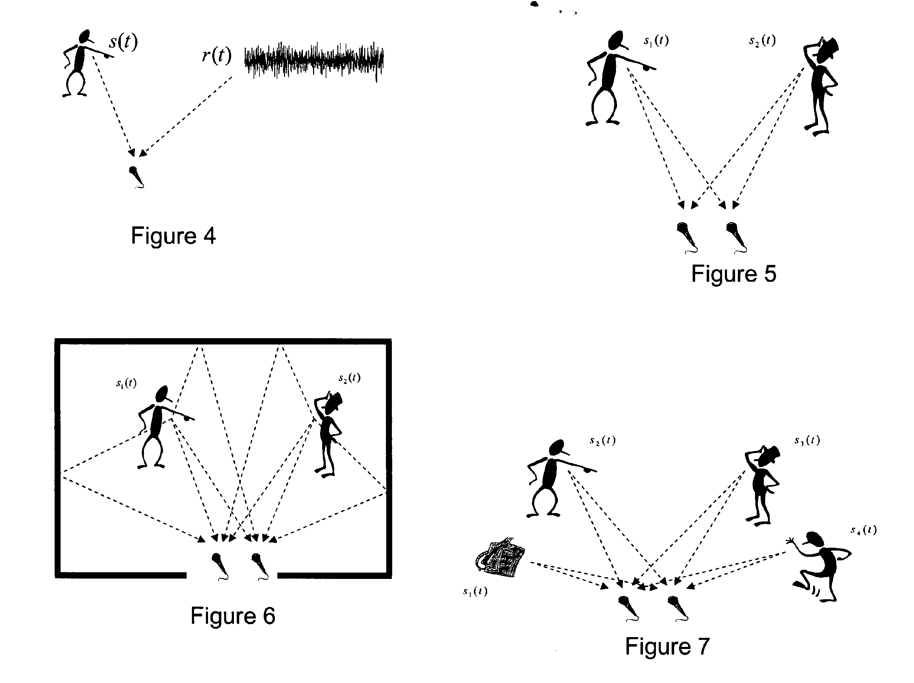

The complexity of the separation problem and the improvement of voice quality depend, largely, on the mixed model that more closely reflects reality. We can easily make out five mixed situations, organized along an incremental ladder of complexity:
1. Instantaneous mix. This is the simplest case. It assumes that the microphones receive a linear and instantaneous combination of original voices. Unfortunately, this model is not plausible for recordings of real voice mixes.
2. Stationary interferences **(****Figure 4****).** In this situation, the microphone registers the superposition of the desired voice and an additional, nearly stationary, interference. The classic techniques of spectral subtraction and Wiener filtering, along with the most recent technique of contraction-induced noise suppression, offer possible solutions to the problem of eliminating this interference.
3. Nonechoic situation **(****Figure 5****).** This takes into account those cases in which there exists a superposition of voice signals that arrive with several delays and microphone attenuations. Even still, the nonechoic situation takes into account only the direct component of the signals present in the microphones and, therefore, it represents negligible components caused by echoes or reverberation. Separation techniques that function in the area of frequencies and techniques based on the direction of arrival (DOA) are possible alternatives to be applied in this mixed model.
4. Reverberating situation **(****Figure 6****).** This is a highly complex situation. The signals recorded by the microphones are still a linear combination of original voices; however, now not only the direct components of the signals are present, but so are all the other possible echoes and reverberations that are created by the configuration of the recording room. The separation methods that are applied, in this case, work in the area of frequencies and face an additional problem, not fully resolved, which is known as "the problem of the permutation of solutions."
5. Insufficient microphones **(****Figure 7****).** This is the most complex situation from both the theoretical and computational point of view. It is characterized by the existence of more sounds or voices than microphones and, in general, is an irreversible problem if there is not any additional information or hypotheses. In practice, it presents an nonechoic situation and the separability of the components of the different voices in a transformed domain. This hypothesis tends to allow for the construction of an adapted mask for the desired voice signal that, later, is applied to each of the recordings to make it more highly appreciable.

There are different signal separation techniques that optimize the subtitling process in various situations:
- Pre-processing techniques for voice signals, for example, techniques based on spectral attenuation (i.e. spectral subtraction, Wiener filtering) for the reduction of background noise. These techniques have proven to be highly effective, having been recently incorporated in the standards of the ETSI (European Telecommunications Standards Institute) relating to the specifications of algorithms for the robust representation of voice for recognition systems.
- Detection of voice activity. The pre-processing techniques previously cited are based on the estimate of spectral characteristics of background noise to be eliminated. In the absence of a reference of said noise, it is necessary to carry out the estimation during periods of voice signal absence. For this reason, a fundamental component is the module of voice activity detection (VAD). Voice activity detectors based on temporary information with long delays can be used.
- Normalization of characteristics. The characteristics most frequently used by the voice recognition system are based on the Mel Frequency Cepstral Coefficients (MFCC). It is well known that these coefficients are very sensitive to variations in the acoustic environment, with the distortion induced by this environment being the primary source of degradation in voice recognition systems. The distortion induced by the variations in the acoustic environment are manifested through the transformation of probability distributions of the characteristics (MFCC), thus generating a discrepancy between the probability distributions "learned" by the voice recognition system (generally, having been configured in conditions with an absence of noise), and the probability distributions of the characteristics observed in degraded acoustic environments.

The traditional approximations to this problem are based on linear transformations like the Cepstral Mean Subtraction (CMS), Cepstral Mean and Variance Normalization or temporary trajectory filtering. However, it is well known that the additional noise causes nonlinear distortion in the MFCC domain, for which is difficult to compensate with linear techniques. In this context, nonlinear techniques based on Histogram Equalization can be used for the normalization of these characteristics.

## Claims

1. Subtitle generation method for live programs, these being programs with a multitude of participants (1) and including the following characteristics:
- Assigning a subtitling technician (2) to each participant (1), being able to assign one subtitling technician to various participants. Such assignment will occur before the start of the live program
- Repeating, by each subtitling technician, in a summarized and conceptualized form, what his/her assigned participant is saying, at that time, in the live program
- Transforming acoustic signals from the voice of each subtitling technician (2) in audio signals using, at least, one microphone (7)
- Extracting, in an adapted text (4), each audio signal during a stage of automatic voice recognition
- Sending each adapted text (4) to a central data processing unit (6)
- Revising, with the help of a subtitling editor (5), the adapted text (4) received by the central data processing unit (6), thus giving the text the proper format and/or correcting the errors produced during the automatic voice recognition stage by the subtitling technician (2).
- Inserting the adapted text (4), once revised, of each participant in the images of the program, with the text and images duly synchronized, transmitting said images to the screen (9) with the text (4) already inserted

2. Subtitle generation method according to demand 1, **characterized by** the additional inclusion of an audio signal processing stage to separate the different voice signals and reduce the noise and external interference before extracting the adapted text (4).

3. Subtitle generation method according to demand 2, **characterized by** an audio signal processing stage that is jointly carried out for all of the audio signals from the microphones (7) in a central audio processing unit (8).

4. Subtitle generation method according to demand 2, **characterized by** an audio signal processing stage that is independently carried out for each of the audio signals from the microphones (7).

5. Subtitle generation method according to all of the previous demands, **characterized by** an automatic voice recognition stage for each of the subtitling technicians (2) to be carried out by a voice recognizer (3), with one voice recognizer (3) per technician (2) and with each voice recognizer (3) adapted to the corresponding subtitling technician (2).

6. Subtitle generation method according to demand 5, **characterized by** each voice recognizer (3) having a database with information adapted to the topic of the live program.

7. Subtitle generation method according to any of the demands 1-6, **characterized by** additional inclusion of the identification of participants and their corresponding image-inserted texts (4) by coloring the adapted text (4), once revised, of each participant according to the fixed color for each participant (1).

8. Subtitle generation method according to demand 7, **characterized by** the identification of the participant to which each image-inserted text (4) corresponds is carried out by the subtitling editor (5).

9. Subtitle generation method according to demand 7, **characterized by** the identification of the participant to whom each image-inserted text (4) is carried out during the automatic voice recognition stage.

10. Subtitle generation method according to any of the demands 1-9, **characterized by** the additional insertion of sound effects, from a predetermined list, for a specific image-inserted text (4).

11. Subtitle generation method according to any of the demands 1-10, **characterized by** the additional insertion of contextual information, from a predetermined list, for a specific image-inserted text (4).
